# EUROPEAN PATENT APPLICATION

(11) **EP 4 796 502 A1**
(43) Date of publication of application: **26.08.2026**
(21) Application number: 24879819.1
(22) Date of filing: 18.10.2024
(51) Int. Cl.: C02F 1/00, C02F 3/12

(54) **INFORMATION PROCESSING METHOD, COMPUTER PROGRAM, AND INFORMATION PROCESSING DEVICE**

(30) Priority: 20.10.2023 JP 2023181302
(71) Applicant: Sumitomo Chemical Company, Limited, Tokyo 103-6020 (JP)
(72) Inventor: MAEDA, Daiki, Osaka-shi, Osaka 554-8558 (JP)
(74) Representative: J A Kemp LLP
(86) International application number: PCT/JP2024/037178
(87) International publication number: WO 2025/084399

(57) **Abstract**

Provided is an information processing method and the like capable of automatically proposing an answer to an inquiry on a wastewater treatment system.

The information processing method includes, executed by a computer, receiving a question on a wastewater treatment system from a user, acquiring operational information on an operation of the wastewater treatment system, inputting the received question and the acquired operational information to a language processing model that uses a question on a wastewater treatment system and operational information on an operation of the wastewater treatment system, and acquiring an answer, and providing the acquired answer.

## Description

### Technical Field

The present invention relates to an information processing method, a computer program, and an information processing device.

### Background Art

A wastewater treatment system using an activated sludge method is widely applied as a treatment system for wastewater discharged from a food factory, a chemical factory, or the like, and public sewage. In the wastewater treatment system using the activated sludge method, aeration treatment for supplying oxygen to various kinds of aerobic microorganisms (activated sludge) present in a treatment tank is performed while allowing wastewater to be treated to flow into the treatment tank. Since organic pollutants contained in the wastewater in the treatment tank are decomposed by action of the aerobic microorganisms, the wastewater is purified. A technique for supporting operation management of the wastewater treatment system using such an activated sludge method is disclosed.

For example, Patent Literature 1 discloses a wastewater treatment facility diagnosis method capable of appropriately grasping a status of activated sludge in a wastewater treatment facility only by measuring a preselected index and inputting the measurement results.

### Citation List

### Patent Literature

Patent Literature 1: WO 2020/183576 A

### Summary

### Technical Problems

The technique described in Patent Literature 1 has a problem that it is not possible to respond to individual inquiries generated in the wastewater treatment system. In the wastewater treatment system, states of the wastewater and the activated sludge always change due to various causes, and thus, inquiries from users about how to deal with these changes are generated. It is necessary for a person in charge to individually respond to each inquiry, and a human burden is large. Such a problem is not limited to the wastewater treatment system using the activated sludge method, and can be similarly present in general wastewater treatment systems using various methods.

An object of the present disclosure is to provide an information processing method and the like capable of automatically proposing an answer to an inquiry on the wastewater treatment system.

### Solution to Problems

An information processing method according to an aspect of the present disclosure includes, executed by a computer, receiving a question on a wastewater treatment system from a user, acquiring operational information on an operation of the wastewater treatment system, inputting the received question and the acquired operational information to a language processing model that uses a question on a wastewater treatment system and operational information on an operation of the wastewater treatment system, and acquiring an answer, and providing the acquired answer.

A computer program according to an aspect of the present disclosure causes a computer to execute processing of receiving a question on a wastewater treatment system from a user, acquiring operational information on an operation of the wastewater treatment system, inputting the received question and the acquired operational information to a language processing model that uses a question on a wastewater treatment system and operational information on an operation of the wastewater treatment system, and acquiring an answer, and providing the acquired answer.

An information processing device according to an aspect of the present disclosure includes a control unit that executes processing of receiving a question on a wastewater treatment system from a user, acquiring operational information on an operation of the wastewater treatment system, inputting the received question and the acquired operational information to a language processing model that uses a question on a wastewater treatment system and operational information on an operation of the wastewater treatment system, and acquiring an answer, and providing the acquired answer.

### Advantageous Effects of Invention

According to the present disclosure, it is possible to automatically propose an answer to an inquiry on the wastewater treatment system.

### Brief Description of Drawings

Fig. 1 is a schematic diagram of a management system.
Fig. 2 is a block diagram illustrating a configuration of an information processing device.
Fig. 3 is a diagram illustrating a content example of information stored in a wastewater treatment DB.
Fig. 4 is a block diagram illustrating a configuration of a terminal device.
Fig. 5 is a block diagram illustrating a configuration of a control device.
Fig. 6 is an explanatory diagram illustrating an outline of a language processing model.
Fig. 7 is a schematic diagram illustrating an example of an answer screen displayed on a display of the terminal device.
Fig. 8 is a flowchart illustrating an example of a processing procedure executed by the management system.
Fig. 9 is a block diagram illustrating a configuration of the information processing device according to a second embodiment.
Fig. 10 is an explanatory diagram illustrating a method of generating an answer according to the second embodiment.
Fig. 11 is a flowchart illustrating an example of the processing procedure executed by the management system according to the second embodiment.

### Description of Embodiments

The present disclosure will be specifically described with reference to the drawings illustrating the embodiments.

### (First Embodiment)

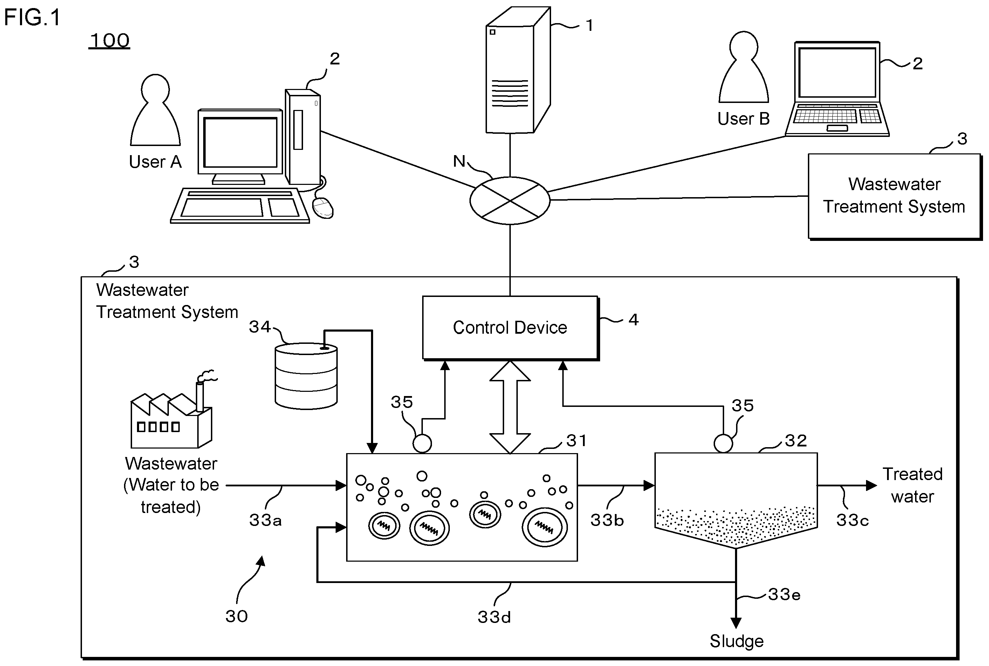

Fig. 1 is a schematic diagram of a management system 100. The management system 100 includes an information processing device 1 as a main device. The information processing device 1 is communicably connected to a plurality of terminal devices 2 and wastewater treatment systems 3 via a network N such as the Internet. The number of terminal devices 2 and the number of wastewater treatment systems 3 may be one or three or more. The information processing device 1 may be integrated into any one of the terminal devices 2 or the wastewater treatment systems 3. In the present embodiment, the wastewater treatment system 3 that performs wastewater treatment by an activated sludge method will be described as an example, but the wastewater treatment system may perform wastewater treatment using another method.

The information processing device 1 is a device capable of performing various types of information processing and transmitting and receiving information, and is, for example, a server computer, a personal computer, a quantum computer, or the like. The information processing device 1 automatically generates an answer to a question on the wastewater treatment system 3 received from the terminal device 2 using a language processing model to be described later, and provides the generated answer to the terminal device 2.

The terminal device 2 is an information processing terminal used by a user of the present system, and is, for example, a personal computer, a smartphone, a tablet terminal, or the like. The user includes, for example, an organization such as a wastewater treatment company retaining the wastewater treatment system 3, an operator belonging to the organization, and the like. The terminal device 2 may be a local computer provided in a factory including the wastewater treatment system 3. The number of wastewater treatment systems 3 owned by the user may be plural.

The wastewater treatment system 3 includes a wastewater treatment device 30 that performs wastewater treatment using activated sludge, and a control device 4 that controls an operation of the wastewater treatment device 30. The activated sludge used by the wastewater treatment device 30 is a complex microbial system, and includes, for example, microorganisms such as bacteria, protozoa, and metazoans. Wastewater treated by the wastewater treatment system 3 contains organic pollutants. The wastewater is, for example, factory wastewater, public sewage, or the like.

The wastewater treatment device 30 includes a treatment tank 31 and a precipitation tank 32. The wastewater (water to be treated) is caused to flow into the treatment tank 31 through a water supply line 33a. A certain amount of the wastewater may be continuously supplied to the treatment tank 31.

The treatment tank 31 includes an aeration unit (not illustrated), and aerobically treats the water to be treated with the activated sludge present in the treatment tank 31. In the treatment tank 31, air diffusion is performed into the treatment tank 31 using gas (air) such as air or oxygen supplied from a blower (not illustrated) to aerate the activated sludge stored therein. Aerobic microorganisms in the activated sludge take in dissolved oxygen from water, and oxidatively decompose the organic pollutants in the water to be treated taken in as bait. The water to be treated in the treatment tank 31 is supplied to the precipitation tank 32 through a water supply line 33b.

In the precipitation tank 32, the water to be treated supplied from the treatment tank 31 is allowed to stand for a predetermined time, and the activated sludge is naturally precipitated. This separates the water to be treated into a supernatant liquid and the activated sludge. The supernatant liquid is discharged as treated water through a water supply line 33c. A part of the precipitated activated sludge is returned to the treatment tank 31 through a return line 33d and is circulated for use. The remainder of the activated sludge is drawn out of the system through a line 33e as excess sludge. The excess sludge is subjected to treatment such as incineration after dehydration, drying, and the like, or recycling into a soil modifier, a civil engineering and construction material, or the like. Note that the precipitation tank 32 is not limited to the precipitation tank type, and may be, for example, a membrane separation device or the like.

The wastewater treatment device 30 is provided with a tank 34 that stores a nutritional agent. The nutritional agent is an example of an additive used in the wastewater treatment system 3. The nutritional agent stored in the tank 34 is continuously added to the treatment tank 31 by a predetermined amount using, for example, a pump (not illustrated). A form of the nutritional agent is not limited to a liquid form, and may be, for example, a formulation form, a powder form, or the like. The nutritional agent may be added in the precipitation tank 32, the water supply lines 33a and 33b, or the return line 33d. The nutritional agent may be added manually. Examples of the nutritional agent include methanol, ammonia, urea, and phosphoric acid.

The wastewater treatment device 30 is further provided with a sensor (detection device) 35 for detecting the states of the wastewater treatment device 30 and of the wastewater and the activated sludge in the wastewater treatment device 30. Examples of the sensor 35 include an imaging device, a thermometer, a flow meter, a pH meter, an ORP meter, a DO meter, an MLSS meter, a TOC meter, an ammonia meter, a nitrogen meter, and a phosphorus meter. A plurality of the sensors 35 may be provided. The sensor 35 is connected to the control device 4 in a wired or wireless manner, and outputs detection information obtained by detection to the control device 4.

Examples of the detection information detected by the sensor 35 include an image representing the state of the wastewater containing the activated sludge, a temperature in the wastewater treatment device 30, a temperature of the wastewater, a flow rate of the wastewater, pH of the wastewater, oxidation reduction potential (ORP) of the wastewater, dissolved oxygen (DO) concentration of the wastewater, mixed liquor suspended solids (MLSS) concentration of the wastewater, total organic carbon (TOC) of the wastewater, ammonia concentration of the wastewater, nitrogen concentration of the wastewater, and phosphorus concentration of the wastewater.

A configuration of the wastewater treatment device 30 is an example and is not limited. The wastewater treatment device 30 may include, for example, a pre-treatment tank, a pre-treatment precipitation tank, and the like provided before the treatment tank 31. The treatment tank 31 may include a plurality of stages.

The control device 4 is, for example, a local computer provided in a factory including the wastewater treatment device 30. The control device 4 controls the operation of the wastewater treatment device 30 in accordance with operating conditions set for the wastewater treatment device 30. The control device 4 also receives the detection information detected by the sensor 35. The control device 4 transmits the received detection information, operation state information indicating an operation state, nutritional agent information on addition of the nutritional agent, or the like to the information processing device 1. The control device 4 may be communicably connected to the information processing device 1, for example, via a relay device (not illustrated) such as a router or a gateway.

In the present specification, the operating conditions include, in addition to the conditions directly set for the wastewater treatment device 30, the conditions indirectly set according to the directly set items. Examples of the operating conditions include a dilution amount of raw water, a flow rate (treatment flow rate) of the wastewater flowing into the wastewater treatment device 30, a total organic carbon amount of the wastewater, an aeration amount in the treatment tank 31, a mixed liquor suspended solids concentration, an air flow rate, a blower rotation speed, a return flow rate in the precipitation tank 32, an interface position, and a sludge drawing amount.

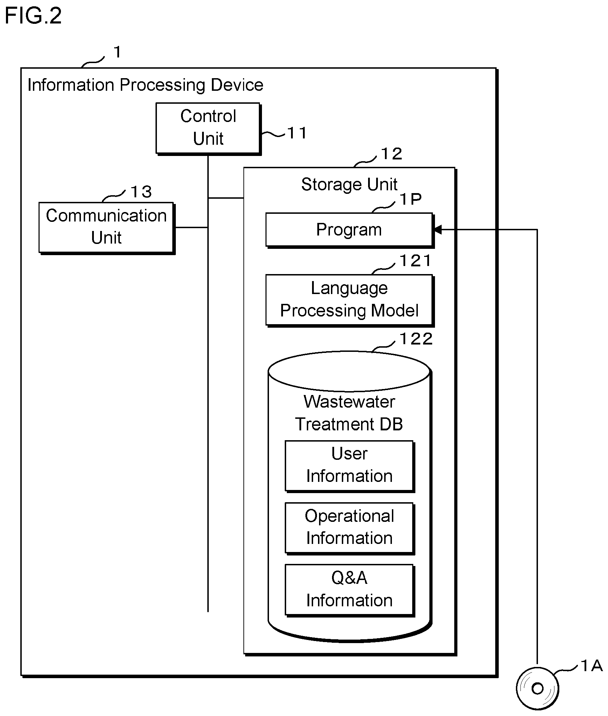

Fig. 2 is a block diagram illustrating a configuration of the information processing device 1. The information processing device 1 includes a control unit 11, a storage unit 12, and a communication unit 13. The information processing device 1 may be a multi-computer including a plurality of computers, or may be a virtual machine virtually constructed by software.

The control unit 11 includes one or a plurality of arithmetic processing units such as a central processing unit (CPU) and a graphics processing unit (GPU). The control unit 11 executes processing by controlling components using a memory such as a built-in read only memory (ROM) or a random access memory (RAM), a clock, a counter, and the like. Functions of the information processing device 1 may be realized by software, or some or all of the functions may be realized by hardware such as an application specific integrated circuit (ASIC) or a field programmable gate array (FPGA).

The storage unit 12 includes, for example, a nonvolatile memory such as a hard disk, a flash memory, or a solid state drive (SSD). The storage unit 12 may be an external storage device connected to the information processing device 1. The storage unit 12 stores various computer programs and data referred to by the control unit 11. The storage unit 12 stores a program 1P for causing a computer to execute processing related to generation of the answer to the question, and a language processing model 121 and a wastewater treatment database (DB) 122 necessary for execution of the program 1P. The language processing model 121 is a model generated by machine learning. The language processing model 121 is assumed to be used as a program module constituting a part of artificial intelligence software.

A computer program (computer program product) including the program 1P may be provided by a non-transitory recording medium 1A on which the computer program is readably recorded. The storage unit 12 stores a computer program read from the recording medium 1A by a reading device (not illustrated). The recording medium 1A is, for example, a magnetic disk, an optical disk, a semiconductor memory, or the like. In addition, the computer program may be downloaded from an external server connected to a communication network and stored in the storage unit 12. The program 1P may be a single computer program or may include a plurality of computer programs, and may be executed on a single computer or may be executed on a plurality of computers interconnected by the communication network.

The communication unit 13 includes a communication device that realizes communication via the network N. The control unit 11 transmits and receives data to and from the terminal device 2 and the control device 4 via the communication unit 13.

The configuration of the information processing device 1 is not limited to the above-described example, and may include, for example, an operation unit for receiving an operation of the user, a display for displaying an image, and the like.

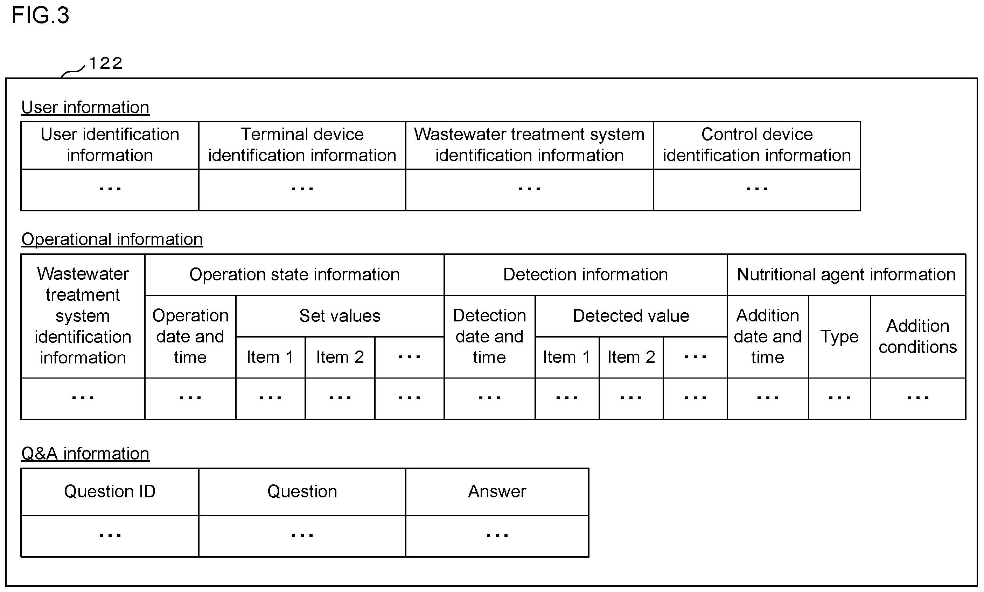

Fig. 3 is a diagram illustrating a content example of information stored in a wastewater treatment DB 122. The wastewater treatment DB 122 is a database that stores information on the wastewater treatment in the wastewater treatment system 3. The wastewater treatment DB 122 includes, for example, user information on the user of the wastewater treatment system 3, operational information on an operation of the wastewater treatment system 3, Q&A information indicating the question and the answer on the wastewater treatment system 3, and the like.

In the user information, for each of a plurality of the users who use the management system 100, information such as user identification information for identifying the user, terminal device identification information for identifying the terminal device 2 used by the user, wastewater treatment system identification information for identifying the wastewater treatment system 3 owned by the user, and control device identification information for identifying the control device 4 of the wastewater treatment system 3 is stored in association.

The operational information is information on the operation of the wastewater treatment system 3, and includes, for example, the wastewater treatment system identification information of the wastewater treatment system 3, the operation state information indicating an operation state of the wastewater treatment device 30, the detection information detected by the sensor 35, the nutritional agent information on the nutritional agent added to the wastewater treatment system 3, and the like.

The operation state information may include set values of the operating conditions, operation log data, weather information, wastewater information, sludge information, and the like. The weather information indicates weather during the operation. The wastewater information is information on the wastewater in the wastewater treatment system 3. The wastewater information includes, for example, a collection date of the wastewater, the flow rate, BOD, TOC, total nitrogen (TN), total phosphorus (TP), suspended solids (SS), liquid specific gravity, SS density, concentrations of other components, and the like. The sludge information is information on the activated sludge in the wastewater treatment system 3. The sludge information includes, for example, a collection date of the sludge, MLSS, a bacteria death rate, an oxygen consumption rate (for example, oxygen consumption rate during endogenous respiration, oxygen consumption rate for BOD decomposition, and the like), a bacterial flora, sludge volume (SV), sludge volume index (SVI), a content of filamentous bacteria, a floc size, a protozoan species, the number of protozoa, an organic compound/inorganic compound ratio, and a concentration of each component of an organic compound and/or an inorganic compound in the sludge. The wastewater information and the sludge information can be acquired as measurement values and the set values of the operating conditions of the sensor 35 in the wastewater treatment system 3, and analysis data thereof.

The detection information may include a detection value and a detection date and time. The nutritional agent information may include a type, addition conditions, and an addition date and time of the nutritional agent. In the operational information, these pieces of information may be stored in time series. The information processing device 1 receives the operational information transmitted from the control device 4 at predetermined or appropriate intervals, and stores the received operational information in the wastewater treatment DB 122 at any time. The operational information may include data calculated by the information processing device 1 on the basis of the detection value or the like transmitted from the control device 4.

The Q&A information includes a plurality of questions assumed for the wastewater treatment system 3 and answers to the questions. The wastewater treatment DB 122 may further include manual information or the like indicating an operation procedure for operation control of the wastewater treatment system 3. The questions, the answers, and manuals are categorized in advance according to their contents, and the Q&A information and the manual information may store each question and answer or the manual and category information in association with each other.

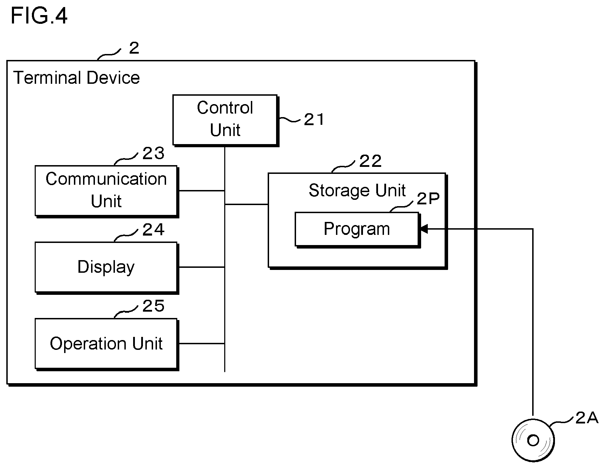

Fig. 4 is a block diagram illustrating a configuration of the terminal device 2. The terminal device 2 is a computer, and includes a control unit 21, a storage unit 22, a communication unit 23, a display 24, and an operation unit 25.

The control unit 21 includes one or a plurality of arithmetic processing units such as a CPU, an MPU, and a GPU. The control unit 21 executes processing by controlling the components using the memory such as the built-in ROM or RAM, the clock, the counter, and the like.

The storage unit 22 includes, for example, the nonvolatile memory such as the hard disk, the flash memory, or the SSD. The storage unit 22 stores the various computer programs and the data referred to by the control unit 21. The storage unit 22 stores a program 2P for causing the computer to execute processing related to acquisition of the answer to the question.

The computer program (computer program product) including the program 2P may be provided by a non-transitory recording medium 2A on which the computer program is readably recorded. The storage unit 22 stores the computer program read from the recording medium 2A by the reading device (not illustrated). The recording medium 2A is, for example, the magnetic disk, the optical disk, the semiconductor memory, or the like. In addition, the computer program may be downloaded from the external server connected to the communication network and stored in the storage unit 22. The program 2P may be the single computer program or the plurality of computer programs, and may be executed on the single computer or may be executed on the plurality of computers interconnected by the communication network.

The communication unit 23 includes the communication device that realizes the communication via the network N. The control unit 21 transmits and receives the data to and from the information processing device 1 via the communication unit 23.

The display 24 includes a display device such as a liquid crystal display or an organic electro luminescence (EL) display. The display 24 displays various types of information including the answers in accordance with an instruction from the control unit 21.

The operation unit 25 is an interface that receives the operation of the user. The operation unit 25 includes, for example, a keyboard, a mouse, a touch panel device with a built-in display, a speaker, a microphone, and the like. The operation unit 25 receives an operation input from the user and transmits a control signal corresponding to an operation content to the control unit 21.

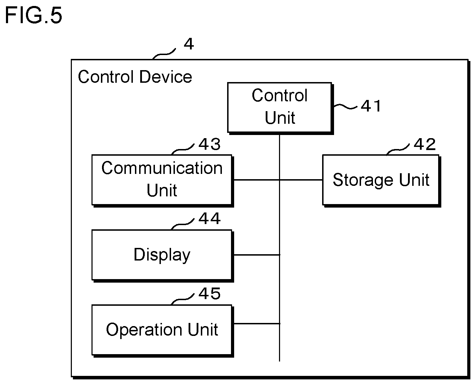

Fig. 5 is a block diagram illustrating a configuration of the control device 4. The control device 4 includes a control unit 41, a storage unit 42, a communication unit 43, a display 44, and an operation unit 45. Since a hardware configuration of the control device 4 is similar to that of the terminal device 2, a detailed description thereof will be omitted.

The information processing device 1 of the present embodiment receives the question on the wastewater treatment system 3 from the user through the terminal device 2, and automatically generates the answer to the received question using the language processing model 121. In the present embodiment, as an example, the information processing device 1 receives a question on a trouble of the wastewater treatment system 3, and generates an answer including a countermeasure for solving the trouble in the question. The information processing device 1 generates a countermeasure corresponding to the question and the operational information by using the operational information collected from the wastewater treatment system 3 in addition to the question received from the user.

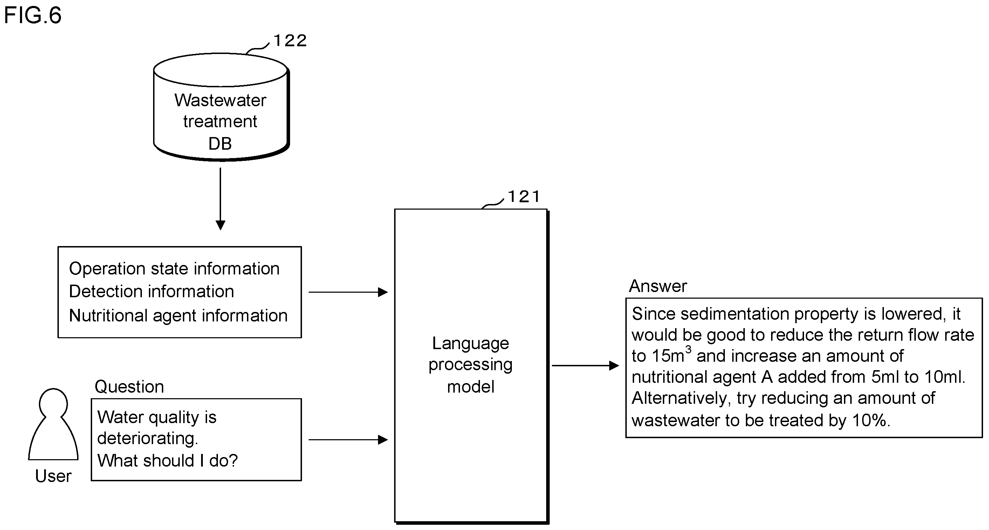

Fig. 6 is an explanatory diagram illustrating an outline of the language processing model 121. The language processing model 121 generates an answer indicating the countermeasure using the question on the trouble of the wastewater treatment system 3 and the operational information of the wastewater treatment system 3. As the language processing model 121, for example, bidirectional encoder representations from transformers (BERT), transformer, generative pre-trained transformer (GPT)-3, GPT-4, large language model Meta AI (LLaMA), pathways language model (PaLM) 2, or the like can be used. The above model is a general-purpose natural language processing model constructed by performing unsupervised prior learning with a large-scale sentence group.

The language processing model 121 includes an input layer that receives an input of the question and the operational information, an intermediate layer (a hidden layer) that extracts feature amounts of the question and the operational information, and an output layer that outputs the countermeasure. In a transformer model, an attention layer is provided in the intermediate layer, and a position of a word in an entire sentence can be extracted. Note that the natural language processing model is a known technique, and thus, further detailed description will be omitted.

As described above, input data input to the language processing model 121 includes the question from the user and the operational information. When the question is received from the user, the information processing device 1 extracts the operational information corresponding to the question based on the information stored in the wastewater treatment DB 122. Specifically, the information processing device 1 specifies the wastewater treatment system identification information of the wastewater treatment system 3 corresponding to the user identification information of the user whose question has been received with reference to the wastewater treatment DB 122. The information processing device 1 extracts the latest operational information corresponding to the specified wastewater treatment system identification information from the wastewater treatment DB 122. The extracted operational information may be time-series data of the operational information acquired within the latest predetermined period. The operational information may include at least one of control information, the detection information, and the nutritional agent information.

The language processing model 121 outputs an answer indicating the countermeasure according to the input data. The countermeasure includes, for example, the control information indicating the operating condition to be set, the nutritional agent information indicating the type and addition conditions of the nutritional agent to be added, and the like. The nutritional agent information may be any one of the type and addition conditions of the nutritional agent. The answer output from the language processing model 121 may include a source code of a program for causing the wastewater treatment device 30 to execute control according to the operating condition, the addition conditions, and the like.

For example, in response to a question "Water quality is deteriorating. What should I do?", the language processing model 121 outputs a sentence such as "Since sedimentation property is lowered, it would be good to reduce the return flow rate to 15 m³ and increase an amount of nutritional agent A added from 5 ml to 10 ml. Alternatively, try reducing an amount of wastewater to be treated by 10%".

The information processing device 1 may fine-tune the pre-learned language processing model 121 by using information stored in the wastewater treatment DB 122, that is, specific information on the wastewater treatment system 3. The information processing device 1 may also fine-tune the pre-learned language processing model 121 by using training data in which the question on a trouble specific to the wastewater treatment system 3 is associated with the countermeasure for solving the trouble. By fine-tuning the language processing model 121, which has been obtained by pre-learning a large amount of publicly available data, using data independently collected about the wastewater treatment system 3, it is possible to output an appropriate countermeasure for the question on the trouble of the wastewater treatment system 3.

The information processing device 1 may give input data in which a data group extracted from the wastewater treatment DB 122 is inserted into the question as related information to the pre-learned language processing model 121 that has not been fine-tuned, and may generate the answer. The data group input to the language processing model 121 as the related information includes the operational information related to the question from the user.

When the question is received from the user, the information processing device 1 searches the wastewater treatment DB 122 using the received question as a key, and extracts the operational information related to the question. The extracted operational information includes, for example, the latest operational information related to the wastewater treatment system 3 corresponding to the user whose question has been received or the time-series data of the operational information within the latest predetermined period. For example, in response to the question "Water quality is deteriorating. What should I do?", the information processing device 1 acquires, as the operational information, the set values of the operating conditions related to the water quality, a sensor value of a sensing item related to water quality, the type, the addition conditions, and the like of the nutritional agent.

Furthermore, the information processing device 1 may acquire the Q&A information and the manual information as the related information by searching the wastewater treatment DB 122. For example, the information processing device 1 specifies a category of the received question using the received question as the key. The information processing device 1 searches the wastewater treatment DB 122, and extracts the Q&A information and the manual information corresponding to the specified category. The information processing device 1 inputs the received question and related information including the extracted operational information, the Q&A information, and the manual information to the language processing model 121. Note that reference destinations (storage destinations) of the Q&A information and the manual information may be input instead of their extracted data. The related information is not limited to information extracted from the information stored in the wastewater treatment DB 122, and may be acquired by, for example, web information search. As described above, by inputting independently collected data as the related information together with the question to the language processing model 121 that has pre-learned publicly available data, it is possible to output the appropriate countermeasure for the question on the trouble of the wastewater treatment system 3.

Note that the language processing model 121 may have a configuration in which the information processing device 1 accesses and reads the language processing model 121 stored in an external language processing server or the like instead of the configuration stored in the storage unit 12 of the information processing device 1.

The configuration of the language processing model 121 is not limited to the above example. The language processing model 121 only needs to be able to generate the answer to the question. The language processing model 121 may use another learning algorithm such as a recurrent neural network (RNN) or a long short-term memory (LSTM).

Note that the question input to the language processing model 121 is not limited to the question on the trouble, and only needs to be a question on the wastewater treatment system 3, and an output from the language processing model 121 only needs to be an answer corresponding to the question. For example, a question such as "Is the state of the activated sludge good?" or "Tell me a nutritional agent suitable for the state of the wastewater" may be input to the language processing model 121.

The information processing device 1 generates screen information for displaying the answer output from the language processing model 121, and transmits the generated screen information to the terminal device 2. The terminal device 2 displays an answer screen displaying the answer on the display 24 on the basis of the screen information received from the information processing device 1.

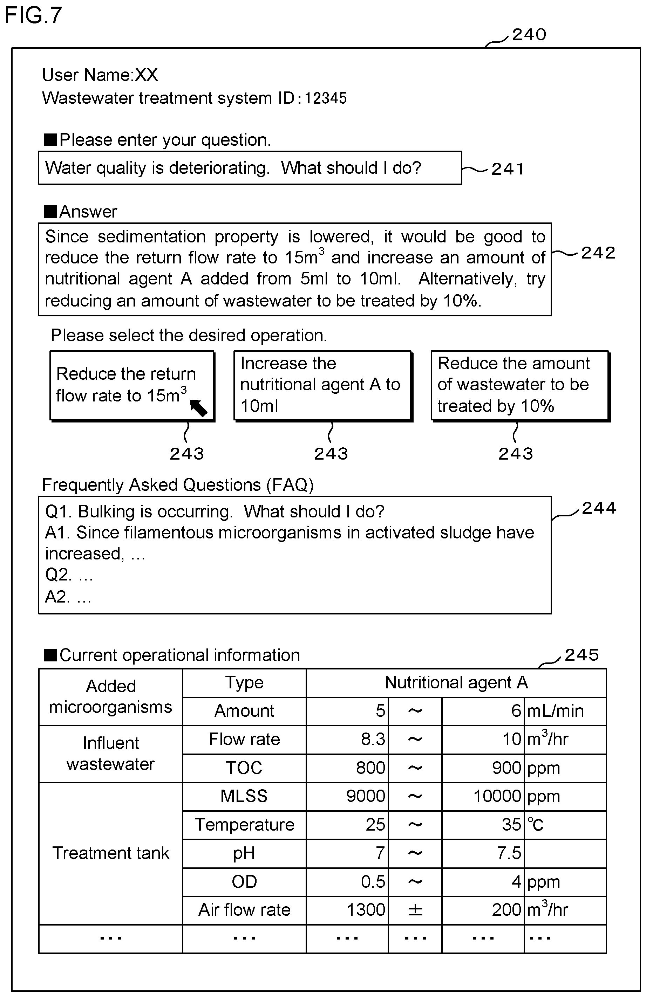

Fig. 7 is a schematic diagram illustrating an example of an answer screen 240 displayed on the display 24 of the terminal device 2. In the example illustrated in Fig. 7, the answer screen 240 includes a question display part 241, an answer display part 242, an instruction display part 243, a Q&A display part 244, and an operational information display part 245.

The question display part 241 displays the question received from the user. The question display part 241 also functions as a receiving unit that receives the question, and the user can input a desired question to the question display part 241 using the operation unit 25.

The answer display part 242 displays the answer to the question displayed on the question display part 241. When acquiring the answer output from the language processing model 121, the information processing device 1 displays the acquired answer on the question display part 241 in a text format. The answer display part 242 corresponds to a first area.

The instruction display part 243 displays a control instruction for instructing control according to the operation indicated in the answer. The instruction display part 243 also functions as a receiving unit that receives an execution request for the control instruction to be displayed. By selecting the instruction display part 243 using the operation unit 25, the user can automatically perform the operation indicated by the selected instruction display part 243 in the wastewater treatment system 3. The instruction display part 243 corresponds to a second area.

In a case where an operation to be automatically executed is included in the answer output from the language processing model 121, the information processing device 1 generates the instruction display part 243 corresponding to each operation to be automatically executed and displays the instruction display part 243 on the answer screen 240. The information processing device 1 may determine whether the answer includes the operation to be automatically executed, for example, by determining whether the answer includes the source code of the program for executing the operation. The operation in which the source code is indicated can be determined to be a target of automatic execution. In the example illustrated in Fig. 7, the answer includes three operations to be automatically executed, and three instruction display parts 243 indicating control instructions corresponding to the respective operations are displayed on the answer screen 240. In each instruction display part 243, contents of the control instruction "reduce the return flow rate to 15 m³", "increase the nutritional agent A to 10 ml", and "reduce the amount of wastewater to be treated by 10%" are displayed, and are associated with source code for executing the control.

When receiving the selection of the instruction display part 243 corresponding to any operation through the terminal device 2, the information processing device 1 outputs the source code associated with the selected instruction display part 243 to the control device 4. According to the source code received from the information processing device 1, the control device 4 controls the operation of the wastewater treatment device 30, such as change of the set values of the operating conditions and change of the addition conditions of the nutritional agent. When the instruction display part 243 is not selected, it can be determined that the execution request for the operation is not received.

Note that the information processing device 1 may cause the language processing model 121 to generate the program after receiving the execution request for the countermeasure. The information processing device 1 displays, on the answer screen 240, for example, the answer output from the language processing model 121 and one or a plurality of instruction display parts 243 indicating the operations extracted from the answer. When receiving the selection of the instruction display part 243 corresponding to any operation through the terminal device 2, the information processing device 1 may input a request to generate the program for executing the received operation into the language processing model 121 and acquire the program output from the language processing model 121.

The Q&A display part 244 displays another question related to the question received from the user and an answer to the question. When acquiring the answer output from the language processing model 121, the information processing device 1 specifies another question (for example, "Bulking is occurring. What should I do?") related to the acquired question with reference to the Q&A information of the wastewater treatment DB 122. For example, the information processing device 1 calculates a similarity between the question received from the user and each question stored in the Q&A information, and extracts a question having a similarity of a predetermined value or more. The information processing device 1 displays the extracted question and the answer to the question in descending order of similarity on the Q&A display part 244.

The operational information display part 245 displays the operational information of the wastewater treatment system 3. The information processing device 1 reads the latest operational information including the operational information used for input to the language processing model 121 from the wastewater treatment DB 122, and displays the read operational information on the operational information display part 245. For example, the set values of the operating conditions of the wastewater treatment system 3, the detection value by the sensor 35, the type of the nutritional agent, the addition conditions of the nutritional agent, and the like are displayed on the operational information display part 245. The operational information display part 245 corresponds to a third area.

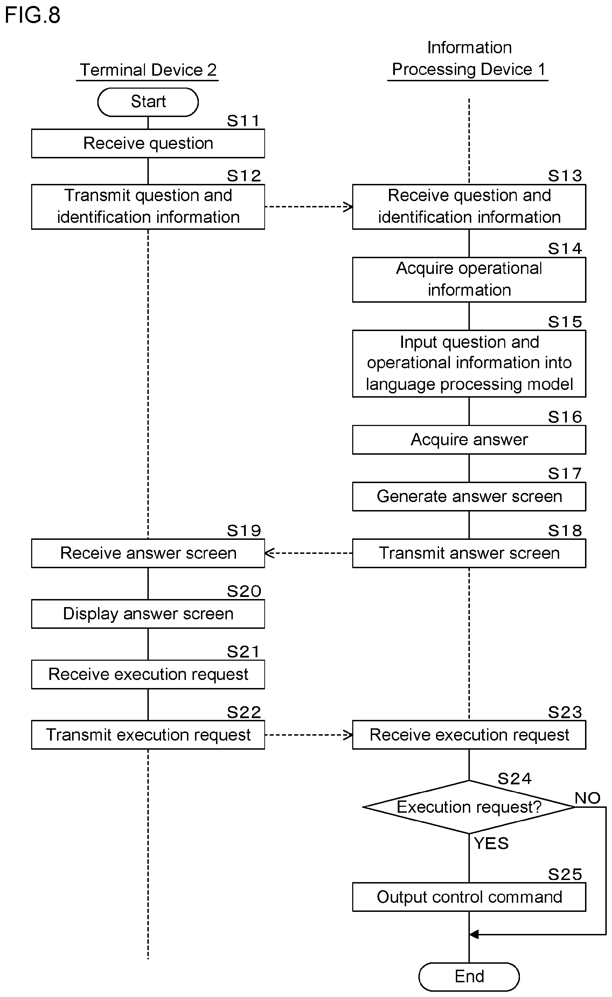

Fig. 8 is a flowchart illustrating an example of a processing procedure executed by the management system 100. The following processing is executed by the control unit 11 according to the program 1P stored in the storage unit 12 of the information processing device 1, and is executed by the control unit 21 according to the program 2P stored in the storage unit 22 of the terminal device 2. The control unit 11 executes the following processing in parallel with acquisition processing of the operational information through the control device 4.

The control unit 21 of the terminal device 2 receives the input of the question on the wastewater treatment system 3 based on the operation of the operation unit 25 by the user (step S11). The control unit 21 may receive the question by voice data.

The control unit 21 transmits the received question and the identification information of the user or the terminal device 2 to the information processing device 1 in association with each other (step S12). The control unit 21 may acquire the user identification information by receiving login using a user account in advance.

The control unit 11 of the information processing device 1 receives the question and the identification information of the user or the terminal device 2 (step S13).

Based on the information stored in the wastewater treatment DB 122, the control unit 11 acquires the operational information of the wastewater treatment system 3 corresponding to the identification information of the user or the terminal device 2, which is the operational information corresponding to the question (step S14). Note that the control unit 11 may output a request for the operational information to the control device 4 upon receiving the question, and acquire the operational information from the control device 4 as a response to the request.

The control unit 11 inputs the acquired question and the operational information into the language processing model 121 (step S15), and acquires the answer indicating the countermeasure output from the language processing model 121 (step S16).

The control unit 11 generates the answer screen 240 displaying the acquired answer (step S17). The control unit 11 transmits the generated answer screen 240 to the terminal device 2 corresponding to the identification information of the user or the terminal device 2 acquired in step S13 (step S18).

The control unit 21 of the terminal device 2 receives the answer screen 240 (step S19). The control unit 21 displays the received answer screen 240 on the display 24 (step S20).

The control unit 21 uses the instruction display part 243 of the answer screen 240 to receive the selection of one of the instruction display parts 243, thereby receiving the execution request for the control instruction corresponding to the selected instruction display part 243 (step S21). The control unit 21 transmits the received execution request for the control instruction to the information processing device 1 (step S22).

The control unit 11 of the information processing device 1 receives the execution request for the control instruction (step S23). Note that, in a case where the selection of the instruction display part 243 has not been received, processing of steps S21 to S23 may be omitted.

The control unit 11 determines whether the execution request for the control instruction has been received (step S24). When it is determined that the execution request for the control instruction has not been received as the execution request for the control instruction has not been received from the terminal device 2 (S24: NO), the control unit 11 skips step S25 and ends the processing.

When it is determined that the execution request for the control instruction has been received as the execution request for the control instruction has been received from the terminal device 2 (S24: YES), the control unit 11 transmits a control command for executing a control instruction for which the execution request has been received to the control device 4 (step S25). The control unit 11 transmits, for example, the source code of the program included in the answer output from the language processing model 121 as the control command. The control unit 11 preferably specifies the control device 4 corresponding to the identification information of the user or the terminal device 2 on the basis of the information stored in the user information of the wastewater treatment DB 122, and transmits the control command to the specified control device 4. The control unit 11 ends a series of processing.

According to the present embodiment, since the answer to the question from the user can be automatically provided, it is not necessary for a person in charge to respond to each inquiry, and a human burden is reduced. Since automatic response by the information processing device 1 is possible, the answer can be presented quickly. It is also possible to quickly provide answers to inquiries from the plurality of users.

By using the language processing model, the answer can be easily and accurately generated. By using the operational information of the wastewater treatment system 3 as an input element together with the question, it is possible to output not only general contents but also more specific and specialized answers, for example, specific operating conditions of the wastewater treatment device and specific addition conditions of the additive. By causing the language processing model and the wastewater treatment system to cooperate with each other and generating the control command for the wastewater treatment system by the language processing model, it is possible to execute a series of processing from proposal of the answer to the control of the wastewater treatment system, thereby responding to the trouble more quickly. Since whether various operations need to be executed can be easily received through the answer screen, convenience for the user is improved. By displaying the related Q&A and operation situation in addition to the answer to the question on the answer screen, it is possible to grasp multifaceted information.

### (Second Embodiment)

In a second embodiment, a type and the addition conditions of the additive are estimated using an estimation model. In each of the following embodiments, differences from the first embodiment will be mainly described, and configurations common to the first embodiment will be denoted by the same reference numerals, and a detailed description thereof will be omitted.

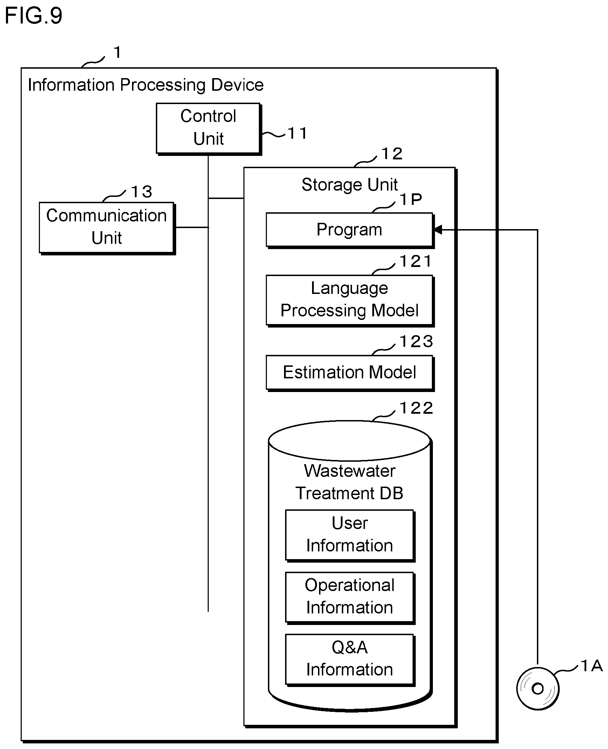

Fig. 9 is a block diagram illustrating a configuration of the information processing device 1 according to the second embodiment. The information processing device 1 according to the second embodiment stores an estimation model 123 in the storage unit 12. The estimation model 123 is a machine learning model that receives the detection information of the wastewater treatment system 3 as an input and outputs the type and addition conditions of the nutritional agent used in the wastewater treatment system 3.

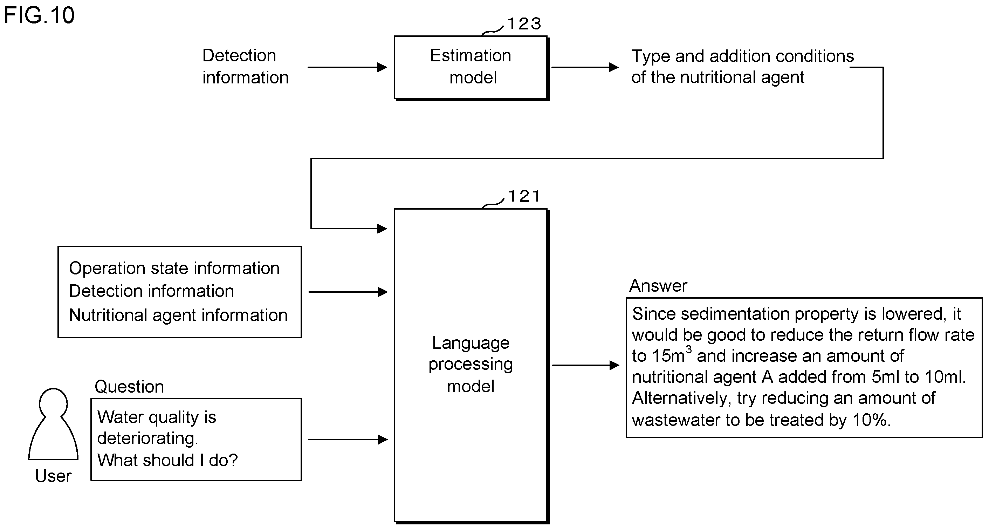

Fig. 10 is an explanatory diagram illustrating a method of generating an answer according to the second embodiment. The information processing device 1 according to the second embodiment generates the answer to the question using two models of the language processing model 121 and the estimation model 123.

The estimation model 123 is, for example, a neural network (NN). The estimation model 123 of the present embodiment receives, as input, an image (hereinafter, also referred to as a sludge image) indicating the state of the wastewater containing the activated sludge as the detection information, and outputs the type and addition conditions of the nutritional agent. Time-series sludge images may be input to the estimation model 123.

The estimation model 123 includes an input layer to which the sludge image is input, an output layer that outputs information indicating the type and addition conditions of the nutritional agent, and an intermediate layer (a hidden layer) that extracts feature amounts. The intermediate layer may include a convolution layer, a pooling layer, a fully connected layer, and the like. The intermediate layer includes a plurality of nodes that extract the feature amounts of the input data, and passes the feature amounts extracted using various parameters to the output layer. When sludge image information is input to the input layer, calculation is performed in the intermediate layer according to learned parameters, and output information indicating the type and addition conditions of the nutritional agent is output from the output layer. The output information may be any one of the type and addition conditions of the nutritional agent.

The estimation model 123 can be generated by preparing training data in which a sludge image obtained from past operation records is associated with the type and addition conditions of the nutritional agent used, and causing an unlearned neural network to perform machine learning using the training data. For example, setting conditions selected by a skilled operator are used as correct values of the type and addition conditions of the nutritional agent.

The information processing device 1 inputs the sludge image included in the training data to the input layer of the estimation model 123, performs arithmetic processing in the intermediate layer, and acquires the type and addition conditions of the nutritional agent output from the output layer. The information processing device 1 compares the type and addition conditions of the nutritional agent output from the output layer with the type and addition conditions of the nutritional agent included in the training data, and optimizes parameters such as a weight (binding coefficient) between neurons such that the type and addition conditions of the nutritional agent output from the output layer approach the correct values. A parameter optimization method is not particularly limited, but for example, the information processing device 1 optimizes various parameters using an error back propagation method. When the learning is completed, the information processing device 1 stores definition information on the learned estimation model 123 in the storage unit 12 as the learned estimation model 123. In this way, the estimation model 123 learned so that the type and addition conditions of the nutritional agent can be appropriately estimated for the sludge image is constructed.

The estimation model 123 is not limited to one that is generated and learned by the information processing device 1. A model learned by the external server may be transmitted to the information processing device 1 and stored in the storage unit 12 as the estimation model 123.

The input data to the estimation model 123 is not limited to the sludge image, and may be the sludge image information on the sludge image. The sludge image information includes, for example, various feature amounts representing states of microorganisms in the sludge image. Here, the microorganisms include, for example, an aggregate of microorganisms such as flocs in addition to microorganisms themselves such as bacteria and protozoa. The sludge image information includes, for example, the type of protozoa, the number of protozoa, the number of filamentous bacteria, the size of the floc, the color of floc, and the like included in the sludge image.

A method for deriving various feature amounts representing the states of microorganisms based on the sludge image is not particularly limited, but for example, various image analysis methods are used. By performing image analysis of the sludge image, each of protozoa, filamentous bacteria, and flocs included in the sludge image can be extracted, and the type and number of protozoa, the number of filamentous bacteria, and the size and color of the floc can be specified based on the extraction result. As the image analysis method, different methods may be used depending on the type of microorganism.

Time-series data representing the type and number of protozoa, the number of filamentous bacteria, and the size of the floc may be input to the estimation model 123. In addition, the sludge image information may include an amount of change in the number of protozoa, an amount of change in the number of filamentous bacteria, and an amount of change in the floc size obtained from the time series data of the number of protozoa, the number of filamentous bacteria, and the floc size, and may also include a change tendency in the number of protozoa, a change tendency in the number of filamentous bacteria, and a change tendency (for example, increase or decrease) in the floc size.

Note that the detection information input to the estimation model 123 is not limited to the sludge image, and may be other detection values. Detection data relating to a plurality of types of detection items may be input to the estimation model 123.

A configuration of the estimation model 123 is not limited to the above-described example, and may be any configuration that can identify the type and addition conditions of the nutritional agent for the detection information. The estimation model 123 may be a model based on another learning algorithm such as a transformer, a convolution neural network (CNN), a recurrent neural network (RNN), a support vector machine (SVM), or a decision tree.

The information processing device 1 inputs the detection information to the estimation model 123, and acquires the type and addition conditions of the nutritional agent output from the estimation model 123. The information processing device 1 acquires the countermeasure output from the language processing model 121 by inputting an acquired estimation result of the type and addition conditions of the nutritional agent, the question, and the operational information to the language processing model 121. That is, the language processing model 121 of the second embodiment generates the answer including the estimation result on the basis of the estimation result by the estimation model 123. Note that the language processing model 121 may be fine-tuned using the estimation result by the estimation model 123.

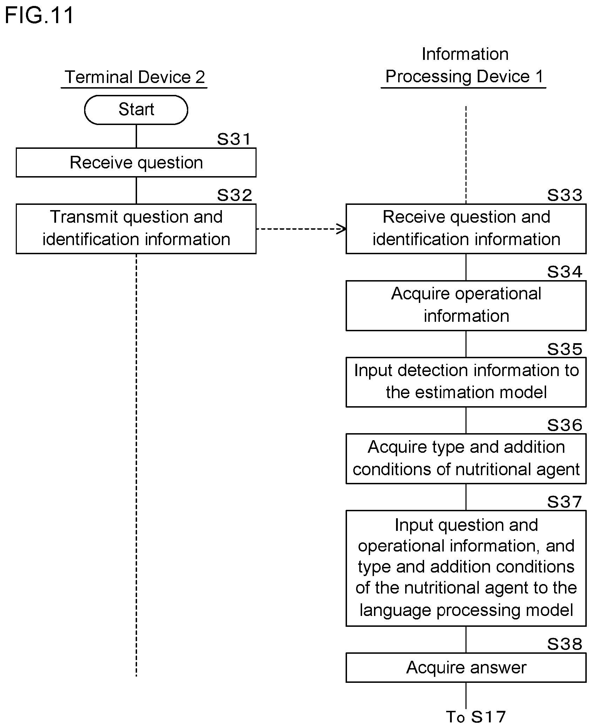

Fig. 11 is a flowchart illustrating an example of the processing procedure executed by the management system 100 according to the second embodiment.

The control unit 21 of the terminal device 2 executes processing similar to steps S11 to S12, receives the input of the question on the wastewater treatment system 3 (step S31), and transmits the question and identification information of the user or the terminal device 2 to the information processing device 1 in association with each other (step S32).

The control unit 11 of the information processing device 1 executes processing similar to steps S13 to S14, receives the question and the identification information (step S33), and acquires the operational information corresponding to the question (step S34).

The control unit 11 inputs predetermined detection information included in the acquired operational information to the estimation model 123 (step S35), and acquires the type and addition conditions of the nutritional agent output from the estimation model 123 (step S36).

The control unit 11 inputs the acquired question and operational information, and the type and addition conditions of the nutritional agent output from the estimation model 123 to the language processing model 121 (step S37). The control unit 11 acquires the answer indicating the countermeasure output from the language processing model 121 (step S38). Thereafter, the information processing device 1 and the terminal device 2 execute processing similar to steps S17 to S25.

According to the present embodiment, it is possible to generate a more accurate answer by combining the estimation model 123 for estimating the type and addition conditions of the nutritional agent with the language processing model 121.

Regarding the above embodiments, the following supplementary notes are further disclosed.

### (Supplementary note 1)

An information processing method including, executed by a computer:
receiving a question on a wastewater treatment system from a user;
acquiring operational information on an operation of the wastewater treatment system;
inputting the received question and the acquired operational information to a language processing model that uses a question on a wastewater treatment system and operational information on an operation of the wastewater treatment system, and acquiring an answer; and
providing the acquired answer.

### (Supplementary note 2)

The information processing method according to supplementary note 1, in which
the question includes a question on a trouble of the wastewater treatment system, and the answer includes a countermeasure for solving the trouble.

### (Supplementary note 3)

The information processing method according to supplementary note 1 or 2, in which
the language processing model generates the answer including a type of additive or the type and addition conditions of additive based on output information from a model that outputs the type of additive or the type and addition conditions of additive to be used in the wastewater treatment system when detection information detected by a detection device provided in the wastewater treatment system is input.

### (Supplementary note 4)

The information processing method according to any one of supplementary notes 1 to 3, in which
the answer includes a countermeasure for solving a trouble of the wastewater treatment system, and
the method further includes:
   determining whether an execution request for the countermeasure has been received; and
   outputting a control command based on the countermeasure to the wastewater treatment system when the execution request is received.

### (Supplementary note 5)

The information processing method according to any one of supplementary notes 1 to 4, in which
the operational information includes at least one of operation state information indicating an operation state of the wastewater treatment system, detection information detected by a detection device provided in the wastewater treatment system, and additive information on an additive used in the wastewater treatment system.

### (Supplementary note 6)

The information processing method according to any one of supplementary notes 1 to 5, in which
the answer includes control information for controlling the operation of the wastewater treatment system or a type of additive used in the wastewater treatment system.

### (Supplementary note 7)

The information processing method according to any one of supplementary notes 1 to 6, in which
the answer includes a type and addition conditions of additive used in the wastewater treatment system.

### (Supplementary note 8)

The information processing method according to any one of supplementary notes 1 to 7, further including:
further providing information on another question and an answer related to the question.

### (Supplementary note 9)

The information processing method according to any one of supplementary notes 1 to 8, further including:
generating screen information for displaying the answer in a text format in a first area, for displaying a control instruction for instructing the wastewater treatment system to perform control according to the answer in a second area, and for displaying the operational information in a third area; and
providing the generated screen information.

### (Supplementary note 10)

The information processing method according to any one of supplementary notes 1 to 9, in which
the wastewater treatment system is a system using an activated sludge method.

It should be understood that the embodiments disclosed herein are illustrative in all respects and are not restrictive. Technical features described in examples can be combined with each other, and the scope of the present invention is intended to include all modifications within the scope of claims and the scope equivalent to claims.

Sequences described in the embodiments are not limited, and processing procedures may be executed in a changed order within a range without contradiction, or a plurality of processing may be executed in parallel. A processing subject of each processing is not limited, and the processing of each device may be executed by another device within the range without contradiction.

Matters described in the embodiments can be combined with each other. Further, independent claims and dependent claims described in claims can be combined with each other in all combinations regardless of the form of citation. Furthermore, a form (multi-claim form) in which two or more other claims are recited is used in claims, but the present invention is not limited thereto. The present invention may be described using a form in which multi-claim (multi-multi claim) that cites at least one of multi-claims is recited.

### Reference Signs List

- 100: management system
- 1: information processing device
- 11: control unit
- 12: storage unit
- 13: communication unit
- 121: language processing model
- 122: wastewater treatment DB
- 123: estimation model
- 1P: program
- 1A: recording medium
- 2: terminal device
- 21: control unit
- 22: storage unit
- 23: communication unit
- 24: display
- 25: operation unit
- 2P: program
- 2A: recording medium
- 3: wastewater treatment system
- 30: wastewater treatment device
- 35: sensor (detection device)
- 4: control device

## Claims

1. An information processing method comprising, executed by a computer:
receiving a question on a wastewater treatment system from a user;
acquiring operational information on an operation of the wastewater treatment system;
inputting the received question and the acquired operational information to a language processing model that uses a question on a wastewater treatment system and operational information on an operation of the wastewater treatment system, and acquiring an answer; and
providing the acquired answer.

2. The information processing method
according to claim 1, wherein
the question includes a question on a trouble of the wastewater treatment system, and the answer includes a countermeasure for solving the trouble.

3. The information processing method according to claim 1 or 2, wherein
the language processing model generates the answer including a type of additive or the type and addition conditions of additive based on output information from a model that outputs the type of additive or the type and addition conditions of additive to be used in the wastewater treatment system when detection information detected by a detection device provided in the wastewater treatment system is input.

4. The information processing method according to any one of claims 1 to 3, wherein
the answer includes a countermeasure for solving a trouble of the wastewater treatment system, and
the method further comprises, executed by the computer:
determining whether an execution request for the countermeasure has been received; and
outputting a control command based on the countermeasure to the wastewater treatment system when the execution request is received.

5. The information processing method according to any one of claims 1 to 4, wherein
the operational information includes at least one of operation state information indicating an operation state of the wastewater treatment system, detection information detected by a detection device provided in the wastewater treatment system, and additive information on an additive used in the wastewater treatment system.

6. The information processing method according to any one of claims 1 to 5, wherein
the answer includes control information for controlling the operation of the wastewater treatment system or a type of additive used in the wastewater treatment system.

7. The information processing method according to any one of claims 1 to 6, wherein
the answer includes a type and addition conditions of additive used in the wastewater treatment system.

8. The information processing method according to any one of claims 1 to 7, further comprising, executed by the computer:
further providing information on another question and an answer related to the question.

9. The information processing method according to any one of claims 1 to 8, further comprising, executed by the computer:
generating screen information for displaying the answer in a text format in a first area, for displaying a control instruction for instructing the wastewater treatment system to perform control according to the answer in a second area, and for displaying the operational information in a third area; and
providing the generated screen information.

10. The information processing method according to any one of claims 1 to 9, wherein
the wastewater treatment system is a system using an activated sludge method.

11. A computer program causing a computer to execute processing of
receiving a question on a wastewater treatment system from a user,
acquiring operational information on an operation of the wastewater treatment system,
inputting the received question and the acquired operational information to a language processing model that uses a question on a wastewater treatment system and operational information on an operation of the wastewater treatment system, and acquiring an answer, and
providing the acquired answer.

12. An information processing device comprising a control unit that executes processing of
receiving a question on a wastewater treatment system from a user,
acquiring operational information on an operation of the wastewater treatment system,
inputting the received question and the acquired operational information to a language processing model that uses a question on a wastewater treatment system and operational information on an operation of the wastewater treatment system, and acquiring an answer, and
providing the acquired answer.
